# EUROPEAN PATENT SPECIFICATION

(11) **EP 3 758 273 B1**
(45) Date of publication and mention of the grant of the patent: **04.11.2026**
(21) Application number: 19382548.6
(22) Date of filing: 27.06.2019
(51) Int. Cl.: H04L 9/00, H04L 9/08, H04L 9/32, H04W 12/00, H04W 12/02, H04W 12/12

(54) **PRIVACY-PRESERVING SERVICE USAGE BILLING FOR INTERCONNECTED MOBILE NETWORKS USING HOMOMORPHIC ENCRYPTION AND BLOCKCHAIN**
ABRECHNUNG DER NUTZUNG VON DIENSTEN FÜR MITEINANDER VERBUNDENE MOBILFUNKNETZE UNTER VERWENDUNG HOMOMORPHER VERSCHLÜSSELUNG UND BLOCKCHAIN
FACTURATION DE L'UTILISATION DE SERVICES POUR LES RÉSEAUX MOBILES INTERCONNECTÉS UTILISANT LE CHIFFREMENT HOMOMORPHE ET LA BLOCKCHAIN

(43) Date of publication of application: 30.12.2020
(73) Proprietor: Telefónica Innovación Digital, S.L.U., 28013 Madrid (ES)
(72) Inventor: YANG, Xiaoyuan, 28013 MADRID (ES); DE LA ROCHA GOMEZ-AREVALILLO, Alfonso, 28013 MADRID (ES); NUÑEZ DIAZ, Jose, Luis, 28013 MADRID (ES)
(74) Representative: Herrero & Asociados, S.L.

(56) References cited:
- BORGES FABIO ET AL: "A privacy-enhancing protocol that provides in-network data aggregation and verifiable smart meter billing", 2014 IEEE SYMPOSIUM ON COMPUTERS AND COMMUNICATIONS (ISCC), IEEE, 23 June 2014 (2014-06-23), pages 1 - 6, XP032649856, DOI: 10.1109/ISCC.2014.6912612
- HAOJIN ZHU ET AL: "PPAB: A Privacy-Preserving Authentication and Billing Architecture for Metropolitan Area Sharing Networks", IEEE TRANSACTIONS ON VEHICULAR TECHNOLOGY, IEEE SERVICE CENTER, PISCATAWAY, NJ, US, vol. 58, no. 5, 1 June 2009 (2009-06-01), pages 2529 - 2543, XP011248490, ISSN: 0018-9545

## Description

The present invention generally relates to reconciliation systems implemented in mobile network infrastructures.

### Background of the invention

Deploying a mobile network infrastructure is associated with high initial investment cost. The global mobile infrastructure investment related with new 5G will arrive to more than $200 billion (in 2018-2023), whereas the existing 4G infrastructure already required $1200 billion of investment (in 2010-2018). Furthermore, the investment cost per MB of capacity highly depends on physical constrains, such as distance to existing network for interconnection.

One solution to reduce the investment cost is the network sharing or network infrastructure interconnection, where part of network is operated by other entities that do not belong to the network service provider that offer the end-service to the customer. In network sharing, there are 3 entities:
1) the network infrastructure owner;
2) the network service provider that use the other's infrastructure; and
3) customers that receive service from network service provider.

A part of problems associated with the physical infrastructure interconnection, such as network peering point, different entities have to define a business model related with revenue sharing. Different models are available. If two network entities have bilateral relations (this is that two entities share infrastructure mutually), the most used model is the zero-charging, so traffic of both entities flows freely between two networks. Other less used model relates to charging according to traffic volume where an initial price is agreed between two entities in function of the traffic volume. Traffic throughput-based pricing is also very popular model, where a price per Mbps is defined. In order to compute traffic throughput, 90th percentile is normally used to determine the throughput in peak hour.

Traffic volume or throughput-based models have advantages and limitations. It is very simple to implement where information, volume or throughput is easy to obtain. Furthermore, since both entities have access to the same information, no reconciliation mechanism is required. The limitation, however, is that all traffic should be priced in the same manner. Price per MB or Mbps does not depend in any characteristic of the packet payload. For instance, cost of a MB to two different IP addresses should be the same in volume-based model. Cost per MB from two different end-users should be also the same.

Such limitations make the current payload-agnostic models not suitable for mobile networks where price per MB changes according to different factors. For instance, zero-rating policies can be applied to certain services, such as facebook or youtube traffic. In such a case, all traffic related to those domains are cost-free for end-users. Different end-users may also have different contracts. For instance, some users may have flat price per month, where infinite MB could be generated given a fixed cost. Other users are charged according to the volume in mobile network. Hence, a solution to the aforementioned limitations in the current payload models is needed.

The following citations solve the problem of privacy-preserving billing:
BORGES FABIO ET AL, "A privacy-enhancing protocol that provides in-network data aggregation and verifiable smart meter billing".

HAOJIN ZHU ET AL, "PPAB: A Privacy-Preserving Authentication and Billing Architecture for Metropolitan Area Sharing Networks".

### Description of the invention

It is an object of the present invention to provide a reconciliation system in a mobile network infrastructure for data validation between entities (i.e. the service provider and the network infrastructure owners) of the reconciliation system. It is another object of the present invention to provide a method implemented by the reconciliation system for the sharing of the mobile network infrastructure, where traffic pricing depends on payload and other service contract agreements between the service provider and end customer.

By using the proposed reconciliation system according to the present invention:
1) The network service provider can prove to the infrastructure owner/network owner that all traffic generated in the infrastructure is correctly priced according to a network service provider policy,
2) During the process, information about customers are anonymized, so a network owner may not get any identifiable information to any customer, and
3) The network owner does not need to have visibility on the traffic payload.

The proposed reconciliation system has multiple advantages:
- Different visibility rules allow to control the subset of information that each network infrastructure owner can access to.
- The information of each user can be encrypted such that only the owner of telephone line is able to access. The user data can be protected. This property also enables us to implement control users for information supervision mechanism at least the list of all telephone numbers that the control user has called to and the list of all numbers that the end-user has received a call from.
- Without accessing user information, the homomorphic encryption allows network owner to compute the aggregated metrics that participate in the sharing model, including total revenue value.
- Furthermore, the use of an immutable ledger, such as a blockchain database ensures, the immutability of entire system.

Hence, in a first aspect, it is proposed a method for data validation in a mobile network infrastructure between a service provider and N networks, each network having a network owner, end-users and a set of c control users, being the control users those end-users for which the network owner knows at least a metric of their use of the services of the service provider, the method comprising the following steps for each network. In a first step, given an end-user *i* in a network *j* of *the N* networks, the service provider generating a random number *rᵢ*. In a second step given a homomorphic cryptosystem wherein the result of applying a first operation, ×, to two encrypted data is the same as encrypting the result of a second operation, +, to the two unencrypted data as: $ε \left({m}_{1}\right) \times ε \left({m}_{2}\right) = ε \left({m}_{1}+{m}_{2}\right)$

Where *ε* is the encryption function, and m1 and m2 are the unencrypted data. In a third step, given a control-user *i* in the network, a network owner of the network *j* validating a XDR of the control-user *i*, stored by the service provider in an immutable ledger, the XDR comprising a metric *vᵢ* of the control-user *i* by extracting *Eᵢ* = *ε*(*v̅ᵢ*), from the XDR that was stored in the immutable ledger, being *v̅ᵢ* the revenue of control user i that service provider has considered for the control-user *i*.

The method further computing: ${E}_{i} \times ε \left(ri\right) = E$ and the network owner requesting the service provider to decrypt 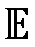 by applying the decryption function *εⁱ* of the homomorphic cryptosystem as ${ε}^{i} \left(E\right)$. Wherein the network owner validates the XDR of the control-user *i*, if ${r}_{i} + {v}_{i} = {ε}^{i} \left(E\right)$.

In a second aspect, it is proposed a system for performing a method for data validation in a mobile network infrastructure between a service provider associated with a first device as part of the system and N networks, each network having a network owner associated with a second device as part of the system, end-users and a set of c control users, being the control users those end-users for which the network owner knows at least a metric of their use of the services of the service provider, the method comprising the following steps for each network. In a first step, given an end-user *i* in a network *j* of *the N* networks, the first device generating a random number *rᵢ*. In a second step, given a homomorphic cryptosystem wherein the result of applying a first operation, ×, to two encrypted data is the same as encrypting the result of a second operation, +, to the two unencrypted data as: $ε \left({m}_{1}\right) \times ε \left({m}_{2}\right) = ε \left({m}_{1}+{m}_{2}\right)$

Where *ε* is the encryption function, and m1 and m2 are the unencrypted data. In a further step, given a control-user *i* in the network, the second device validating a XDR of the control-user *i*, stored by the first device in an immutable ledger, the XDR comprising a metric *vᵢ* of the control-user *i* by the second device extracting *Eᵢ = ε*(*v̅ᵢ*), from the XDR that was stored in the immutable ledger, being *v̅ᵢ* the revenue of control user *i* that the first device has considered for the control user *i.*

In a further step, the second device further computing ${E}_{i} \times ε \left(ri\right) = E$ and the second device requesting the first device to decrypt by applying the decryption function *εⁱ* of the homomorphic cryptosystem ${ε}^{i} \left(E\right)$. Finally, the second device validates the XDR of the control-user *i*, if ${r}_{i} + {v}_{i} = {ε}^{i} \left(E\right)$.

### Brief description of the drawings

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows an architecture of a reconciliation system according to the present invention.
Figures 2 shows probability values of accepting data as valid by a network owner.
Figure 3 shows fraud risk for a network owner using different control users.

### Description of a preferred embodiment

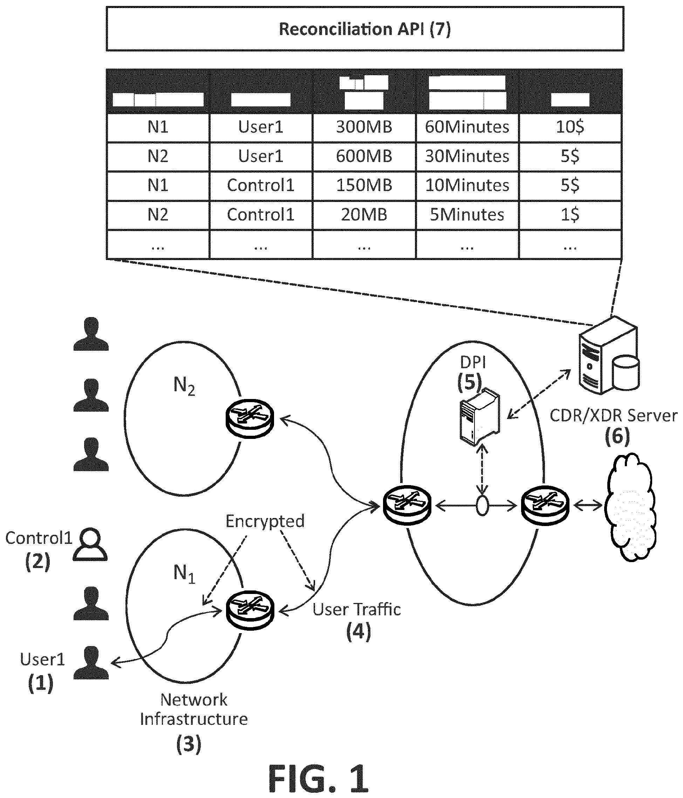

Figure 1 shows the most relevant architecture elements of the reconciliation system according to the present invention. There is a set of N network infrastructures (3) represented by N1 and N2 operated by entities or network owners that differ from the service provider. Users "User1" (1) of the service provider can connect to Internet in any network infrastructure that has agreement with the service provider.

All user traffic (4) is encrypted (end-2-end) from user's device up to service provider core network (8). Encryption provides anonymity for users and there is no mean that anyone can see payload of user's traffic in the network infrastructure, including origin IP and destination IP address. In order to price user traffic according to payload, the service provider core network uses mechanisms such like Deep Packet Inspection DPI (5) to analyze traffic payload.

Hence, the function of the DPI performed by the service provider is to generate XDRs where indicate e.g. the traffic volume generated in each network infrastructure and per user, the user's revenue, etc. All XDRs are stored in XDR/CDR server (6).

There is a set of control users "Control1" (2) whose entity is unknown by the service provider. Each control user knows the total traffic generated in each network infrastructure and billing details, and it is under control of the network owner. Thus, the network owner knows the details of the metrics related with the use of the services of the service provider by the control user, e.g. the overall minutes of voice calls; the amount of data exchanged; the total cost of the services billed; etc.It also knows the list of all telephone numbers that the control user has called to; the list of all numbers that the end-user has received a call from. Service providers, however, do not know the exact identity (i.e. the Mobile Station Integrated Services Digital Network MISDIN) of control users "Control1" (2).

### The invention solves first two problems:

1) How to guarantee the immutability of the information, once it is published by the service provider for reconciliation; and
2) How to allow different network owners to access only that information that is required for reconciliation. For instance, a network owner should not access any information of a user, if that user has not been in his/her infrastructure.

In order to achieve this, the invention uses cryptographic primitives over a blockchain network to support the transparency, trust and confidentiality in the computation of all aggregated metrics used for revenue sharing model for every network owner.

Once the service provider has computed the price related to the use by different users of a specific network owned by a certain network infrastructure owner it updates the XDR which can comprise the following tuple of user's metrics including the network ID, user's traffic "traffic", lengths of user's calls "Voice Call", MISDIN, user's revenue "Price" (as shown in figure 1):
*[network ID, MISDIN, Traffic, Voice Call, Price]*)

Furthermore, the service provider anonymizes the updated XDR and stores it in a blockchain network shared by the service provider and every network owner of the N networks, e.g. N 1 and N2. The registration of the updated XDR in the blockchain ensured the immutability of the data, and thus that the data used to compute the final price for each network owner has not been modified or forged at any moment. The service provider and every network owner deploy a node in the blockchain network in order to be able to access the data stored and the computation performed with it. The more nodes connected to the network, the higher the trust over the infrastructure and the data stored in it.

Thus, the data in the XDR stored in the blockchain infrastructure can be anonymized in the following way:
First of all, the visibility roles in the blockchain infrastructure are configured so that each network owner can only access information owned by him. Thus, a network owner e.g. in N1 will only be able to access information in the rows in the XDR where he is the network infrastructure provider (rows 1 and 3 in figure 1).

The MISDIN, traffic, voice call and price (and all fields of the XDR that can participate in the revenue sharing model) can be anonymized using a cryptographic primitive so that only if the network owner is the owner of that specific MISDIN will be able to validate the correctness of the information in the XDR. Thus, the data for user *i* could be validated using a key *ki* generated from personal data only known by the service provider and the user itself. This will be really useful for network owner's control users used in the data validation and correctness mechanism (explained below).

The selected cryptographic primitive may have *homomorphic* properties so that aggregation operations (such as the computation of the total price for a particular network e.g. N1 or N2) can be performed without decrypting the data. Thus, the aggregated value of all fields (for instance the price field) can be computed in the blockchain infrastructure (using distributed logic/smart contracts) without anyone getting information about the specific users' information that conform the computation.

Furthermore, network owners for N1 and N2 need to trust the information being uploaded by the service provider to the blockchain infrastructure (and used to compute the final price or revenue for the use of their network N1/N2).

To achieve this trust, the invention includes a mechanism based in control user to verify this trust:
A network owner of particular network (N1 or N2) can use a set of control users "Control1" (2) (for which it knows every personal information such as the MISDIN, bank account, and the specific usage of its infrastructure) that he can use in order to validate that the data/information stored in the blockchain by the service provider is correct. The cryptographic primitive contains a random number (the key *ki*) that allows to implement homomorphic properties at same time provides encryption of the real information. This random number is selected as a function of personal information that only end-user and service provider have access to.

Hence, the network owner can compute the encryption of each data field in the XDR by using a public key, shared by the service provider, and the random number that is computed using personal data of the control users. Then, the encryption is compared with data in the blockchain and verify that, indeed, the information in the blockchain for the XDR is correct and it has not been forged.

The network owner can use in this mechanism any number of control users "Control1" (2) he desires. The more control users the network owner uses, the more certain the network owner can be that the information stored in the blockchain XDR is correct.

The service provider does not have any information about which specific users a network owner is using to verify the correctness of the blockchain XDR making almost impractical the forge of XDR information without a network owner detecting it.

These mechanisms along with the blockchain infrastructure ensures the immutability, correctness and trust of the data/user's information stored in the blockchain as part of the XDR. Moreover, as the network owner can only access traffic and voice call information for its control users, the network owner cannot obtain any information about the usage profile of the users in his infrastructure.

A distributed smart contract can be used in the blockchain infrastructure to implement the validation of the aggregated value of all metrics that participate in the revenue sharing model, so that every node in the blockchain network can validate the correctness of the computation without leaking any information about users (due to the homomorphic properties of the cryptographic primitives used to anonymize the real value of the field (e.g. user's revenue) in the XDR).

### The invention further solves second two problems:

3) How to guarantee the anonymity of the information, so only service provider and the end-user has access to; and
4) How to guarantee that information published by the service provider is real.

Depending on a revenue split/sharing model, different information e.g. user's metrics may be needed to be reconciliated. For instance, if the model is just a fix percentage of total revenue, the network owner of N1 or N2 may only need to make sure that total revenue is valid, so reconciliated as in a preferred example according to the present application shown below.

Other cases may involve user-traffic instead of price/revenue values. For instance, the share can be determined in function between traffic in the network versus total traffic of each user. In such a case, our system has to reconciliate the total revenue, total traffic of the end-users and the total traffic of the end-users in a specific network.

In order to simplify the explanation, in a preferred embodiment, the total revenue reconciliation is computed based on the total revenue of the user (i.e. the total of the field "Price" in the XDR as shown in the table for figure 1). However, the present invention is applicable to all other models where involve more information and more fields of the XDR.

In the simplest revenue split/sharing model, a fixed percentage of the total revenue of all users that has been using a given network is shared by the service provider to the network owner.

Being *Rj* the total revenue of the users that has connected to the nefiniork *j*, and *Sⱼ* ∈ [0 - 1] a fixed pre-agreed share value, the perceived revenue for the network owner, *j,* is: ${T}_{j} = {R}_{j} \times {S}_{j}$

The present invention uses homomorphic encryption to solve the reconciliation problem. Homomorphic encryption are all those encryption schemes that allow computation on the ciphered messages. In the preferred embodiment, the computation operation used is the sum-up. Specifically, any homomorphic scheme that provides following property could be used: $ε \left({m}_{1}\right) \times ε \left({m}_{2}\right) = ε \left({m}_{1}+{m}_{2}\right)$

That is that an operation × is defined for encrypted data, where the result of a first operation × of two (*m*₁, *m*₂) encrypted data is the same as encrypting the result of a second operation + of the two unencrypted data.

One example is Benaloh cryptosystem where operation × is the multiplication mod n. Specifically, a preferred embodiment uses Benaloh cryptosystem, however, all other systems with similar homomorphic property could be used.

In Benaloh cryptosystem, the encryption function is given by: $ε \left(m\right) = {g}^{m} {r}^{c} mod n$

Where m is the message to encrypt and public key is the modulus n and the base g with a blocksize of *c*, by given random number *r* ∈ {0, ... . , *n* - 1}. Notice that public key is formed by *n, g* and *c*, so value of *n, g* and *c* is known to everyone. The Benaloh cryptosystem has the following homomorphic property: $\begin{matrix}ε \left({m}_{1}\right) ⋅ ε \left({m}_{2}\right) mod n = \left({g}^{{m}_{1}}{r}_{1}^{c}\right) ⋅ \left({g}^{{m}_{2}}{r}_{2}^{c}\right) mod n = {g}^{{m}_{1} + {m}_{2}} {\left({r}_{1}{r}_{2}\right)}^{c} mod n \\ = ε \left({m}_{1}+{m}_{2}\right)\end{matrix}$

Another example is Paillier cryptosystem where operation × is the multiplication mod *n*².

Using the selected homomorphic cryptosystem, the proposed method performs revenue reconciliation as following:
The service provider encrypts the metric e.g. revenue *mi* (i.e. the price field in the XDR) of each user *i,* using the selected homomorphic cryptosystem, *ε*(*mᵢ*), and publish the encrypted value in the blockchain (as part of the XDR). Hence, network owners with the right access key can access *ε*(*mᵢ*).

Furthermore, the service provider computes the total revenue in the specific network: $T = {\sum }_{i ∈ all users} {m}_{i}$

The service provider shares with network owner, the T, and public key (n, g and c) used to encrypt the revenue of each user.

The network owner computes multiplication (the operation ×) of all encrypted data *ε*(*mᵢ*) available in the blockchain, that have produced revenue in the specific network and which he/her has access to: ${\prod }_{i ∈ all users} ε \left({m}_{i}\right) = {V}_{T}$

The network owner generates a list of random integer numbers R = [r₁, ..., r_{c}], where c is the number of control users that network owner has. Given this R, the network owner computes the following linear combination: ${\prod }_{c ∈ control users} ε {\left({v}_{c}\right)}^{{r}_{c}} = {V}_{c}$

Finally, network owner computes: $V = {V}_{T} \times {V}_{c}$

The network owner will ask the service provider to decrypt V using the private keys, following the selected homomorphic cryptosystem: ${ε}^{i} \left(V\right)$

The network owner only accepts T, if following condition satisfies: $T + {\sum }_{c ∈ control users} {r}_{c} \times {m}_{c} = {ε}^{i} \left(V\right)$

The proposed method ensures that the total revenue could be validated by multiplying the encrypted value of each user and a random linear combination of the control users. Since both control users and the random linear combination is unknown to the service provider, the validation condition only satisfies if the service provider is being honest regarding to revenue values of each users, including those of control users. Furthermore, network owner does not have access to the revenue value of each user, since the network owner only operates with encrypted values.

Following the same procedure, other metrics involved in the revenue share model could be reconciliated. For instance, total data consumed in each network, total number of calls or total length of calls, etc.

In some examples, the total revenue reconciliation could be implemented in a smart contract in the blockchain, so the acceptance or not of the entire revenue share system could be fully automatic and distributed.

In order to ensure trustiness of the entire reconciliation system, each network owner needs a mechanism to validate the revenue information of each end-user, i.e. per user revenue reconciliation. Specifically, network owners need to detect following scenarios:
**1) The service** provider cheating without publishing all end-users that has been using the network.
2) The service provider cheating by publishing a wrong revenue value. For instance, a value that is lower than the real, or even a negative value.

In order to detect above mentioned scenarios, each network owner has a set of control users. For each control user, the network owner knows all metrics that participate in the revenue sharing model, such as total traffic, incoming/outcoming call list, total revenue (paid to the service provider).

For simplicity, it is only explained how to validate the correct value of revenue. However, the same mechanism could be applied to all other metrics. The homomorphic cryptosystem used to encrypt revenue value, relays on a random number that is unknown for the network owner. The random number provides the anonymity of the real value, even public key is known to everyone. Our per-user revenue reconciliation is based on selecting the random number according to some information that both end-user and service providers know.

Such information could be e.g:
The incoming/outgoing call origin/destination of all calls in a month.

The billing address of the end-user.

The bank account of the end-user.

The invoice number of the last month.

All information that is shared between end-user and service provider could be used for reconciliation. Specifically, the procedure is described using the list of all call origin/destination in the last month.

Being Ci the list of all telephone numbers that an end-user i has called to and Ri the list of all numbers that the end-user received a call from, the service provider selects, in a preferred implementation of this invention, *ri,* in the selected homomorphic cryptosystem, as following: ${r}_{i} = MD 5 \left({C}_{i}∩{R}_{i}\right) mod n$

### ∩: String concatenation

Basically, a MD5 hash value of the string concatenation of all telephone numbers in Cᵢ and Rᵢ is generated. Since rᵢ needs to be in *Zₙ*, that is, an integer number lower than n, i.e. [0, ..., n-1], a modulus operation is performed. Any other hash function can be used instead of MD5, as e.g. SHA1.

The network owner implements the following procedure to check revenue value of users. Given a control user *i*, the network owner validates the XDR value of the control user by following procedure:
1. The network owner extracts *Eᵢ* = *ε*(*v̅ᵢ*), from XDR that was stored in the Blockchain. being *v̅ᵢ* the revenue of control user i that service provider has considered for the control user i
2. The network owner generates a random integer number *ri* and computes the following: ${E}_{i} \times ε \left(ri\right) = E$
3. The network owner asks the service provide to decrypt 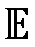 using the private keys, following the selected homomorphic cryptosystem: ${ε}^{i} \left(E\right)$
4. Being *vᵢ* the real revenue of control user i, known to the network owner as it knows the information of the consumption of services by the user i. The network owner accepts the XDR value of control user i, if following condition satisfies: ${r}_{i} + {v}_{i} = {ε}^{i} \left(E\right)$

In a preferred implementation the random integer number rᵢ is computed as follows
1. Compute the string concatenation *Si* of all telephone number in *Ci* and Ri
2. Compute *MD5*(*Sᵢ*) *mod n* and use it as *rᵢ*.

For user identification anonymization, in order to index the XDR rows, MSISDIN is used. However, such information is also subject to protection. For instance, if MISDIN is plain text, the network provider can list all telephones that has been using his/her network. In order to further protect the user, the following function is used to generate the end-user identification in the XDR: ${ID}_{i} = SHA 1 \left({C}_{i}∩{R}_{i}∩MSISDIN\right)$

Basically, it is used the same shared information between end-user and service provider to generate a hash value to identify the user. It is proposed to use SHA1 since has lower collision probability. Other shared information and hash function could be used, however.

In order to compute the fraud risk analysis, using control users, our proposal provides a supervision system for network owner to test the veracity of the information that service provider is sharing for revenue sharing computation.

Being *f*, the proportion of fake information published by service provider, the probability of network owner to accept the information as valid, *P*, is: $\begin{matrix}P \left(I, K, f\right) = \frac{αI}{I} \times \frac{αI - 1}{I - 1} \times … \times \frac{αI - K + 1}{I - K + 1} being α = 1 - f \\ = {\prod }_{i = 0}^{k - 1} \frac{αI - i}{I - i} \\ = \frac{\left(αI\right) ! \times \left(I-K\right) !}{I ! \times \left(αI-K\right) !}\end{matrix}$

Being *I* the total number of users and *K* the number of control users. If *I* is very large compared with *K*, the expression could be approximated as: $P \left(I, K, f\right) \approx {\left(1-f\right)}^{K} begin I ≫ K$

The network owner can limit the probability of accepting fake information as valid below a threshold *t*, for a given proportion of fake information published by the service provider *f*, by selecting a number of control users equal or higher than the minimum value of *K* that makes *P*(*I, K, f*) < *t.*

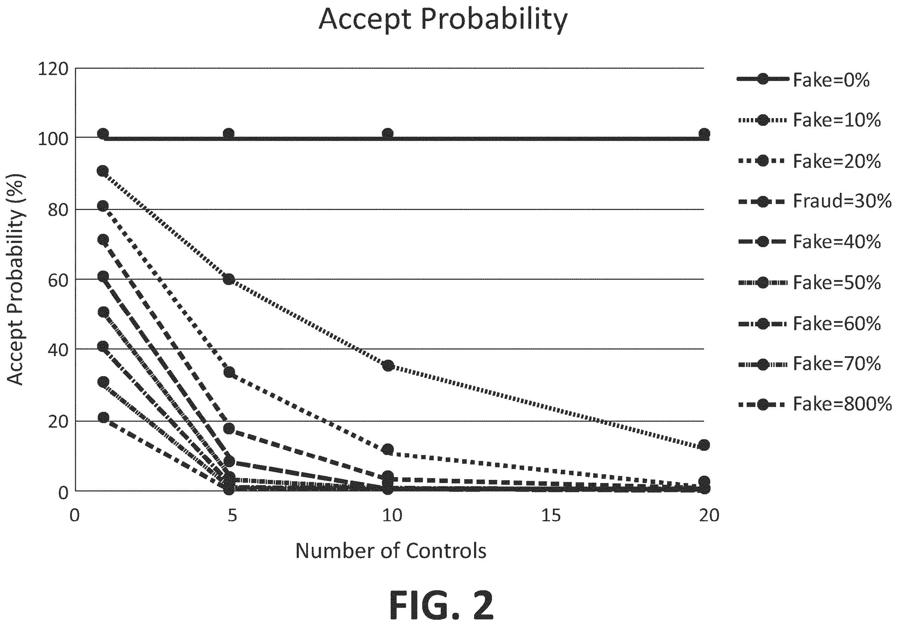

Figure 2 shows the probability of network owner to accept the information as valid in scenarios where service provider introduces different percentages of fake data. In scenario where information is 100% valid, the acceptance probability is always 100%. Using 5 control users, the network owner has a chance of 32% to accept 20% of fake information. As number of control users increases, the miss-accept probability decreases quickly. When there are 20 control users, 20% of fake information is only accepted in 1.2% of cases.

The overall fraud risk, R, from the point of view of network owner is the proportion of fake data times the probability of miss-accepting it as valid: $R \left(I, K, f\right) = f \times P \left(I, K, f\right)$

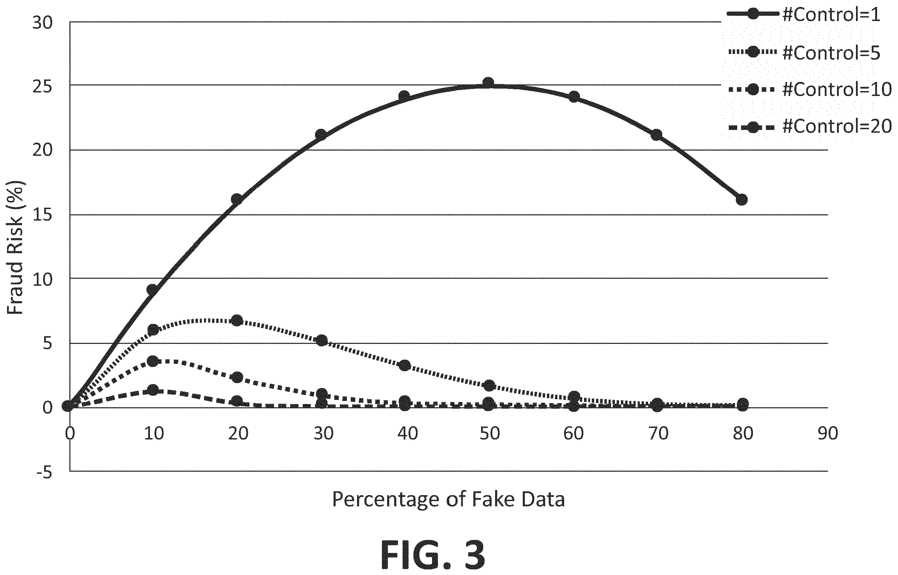

Figure 3 shows a graph plotting the fraud risk in different scenarios. Using five control users, the highest fraud risk is in the case where 20% of information is fake. In such a case, the fraud risk is 6.6%.

The proposed supervision mechanism is collaborative and scales linearly with number of network owners that participate. Using smart contract, once one network owner detects a reconciliation problem, all network owners refuse the information, from service provider, as valid. For instance, if each of 10 owners has 5 control users, the total fraud risk is equivalent to have 50 control users (less than 0.02%).

A person of skill in the art would readily recognize that other types of immutable ledgers or databases could be used instead of a blockchain. Nevertheless, the term blockchain has been used for exemplary purposes throughout the description, as it is the type of immutable ledger used in a preferred embodiment of the invention.

The term "comprises" and the derivations thereof (such as "comprising", etc.) must not be understood in an exclusive sense, i.e., these terms must not be interpreted as excluding the possibility that what is described and defined may include additional elements, steps, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for data validation in a mobile network infrastructure between a service provider and N networks, each network having a network owner, end-users and a set of c control users, the control users being the end-users for which the network owner knows the information of the consumption of services of the service provider, including the real revenue of control user *v_{c}*, the method comprising the following steps for each network:
- for each end-user *i* in a network *j* of the *N* networks, the service provider generating a random number *rᵢ*, wherein *rᵢ* is computed based on data known to the end-user;
- given a homomorphic cryptosystem wherein the result of applying a first operation, ×, to two encrypted data is the same as encrypting the result of a second operation, +, to the two unencrypted data as: $ε \left({m}_{1}\right) \times ε \left({m}_{2}\right) = ε \left({m}_{1}+{m}_{2}\right)$ wherein *ε* is the encryption function, and *m*1 and *m*2 are the unencrypted data;
- given a control-user *c* in the network, a network owner of the network *j* validating an external data representation "XDR" of the control-user *c*, stored by the service provider in an immutable ledger, the XDR comprising an encryption of a metric *v̅_{c}* of the control-user c by: the network owner extracting *E_{c} = ε*(*v̅_{c}*), from the XDR that was stored in the immutable ledger, *v̅_{c}* being the revenue of control user c that the service provider has considered for the control user c;
- the network owner further computing: ${E}_{c} \times ε \left({r}_{c}\right) = E$
- the network owner requesting the service provider to decrypt 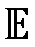 by applying the decryption function *εⁱ* of the homomorphic cryptosystem: ${ε}^{i} \left(E\right)$ and wherein the network owner validates the XDR of the control-user *c*, if ${r}_{c} + {v}_{c} = {ε}^{i} \left(E\right) .$

2. The method for data validation according to claim 1, the service provider computing *rᵢ* as based on the information of the use of the services of the service provider by end-user i.

3. The method for data validation according to claim 2, the service provider computing *rᵢ* as: ${r}_{i} = hash \left({C}_{i}∩{R}_{i}\right) mod n$ *wherein* ∩: *String concatenation*
wherein *Ci* is a list of all telephone numbers that the end-user *i* has called to,
wherein Ri is a list of all numbers that the end-user i received a call from,
wherein n is comprised in the public key of the homomorphic cryptosystem.

4. The method for data validation according to claim 1, further comprising for each end-user of the service provider, the service provider further:
- analyzing traffic load of the end-user *i* in the *N* networks to generate a plurality of XDR's associated with the *N* networks, each XDR comprising a metric *mᵢ* of the end-user *i*;
- anonymizing the XDR's by:
computing encrypted values *ε*(*mᵢ*) of the end-user's metrics *mᵢ* with a public key,
- rewriting the XDR's with the encrypted values *ε*(*mᵢ*); and
- uploading the anonymized XDR's in an immutable ledger network shared by the service provider and the *N* networks,
for the network *j* of the *N* networks, the service provider:
- computing the total value of the end-user's metrics in said network *j* as *T = Σ*_{*i*∈}*_{all users} mᵢ* ;
- providing to the network owner the total value T and the public key;
for the network *j* of the *N* networks, the network owner of the network *j:*
- accessing with the public key the encrypted values *ε*(*mᵢ*) of the anonymized XDR's in the immutable ledger;
- computing a value *V_{T}* = Π*_{i∈ll users} ε*(*mᵢ*) with the accessed encrypted values *ε*(*mᵢ*);
- generating a list of random integer numbers R = [r₁, ..., r_{c}], associated with control users of the network owner of the network *j*
- computing: ${\prod }_{c ∈ control users} ε {\left({v}_{c}\right)}^{{r}_{c}} = {V}_{c}$
- further computing: $V = {V}_{T} \times {V}_{c}$
- requesting the service provider to decrypt *V* by: ${ε}^{i} \left(V\right)$ and; the network owner validating the total value of the end-user's metrics *T* if $T + {\sum }_{c ∈ control users} {r}_{c} \times {v}_{c} = {ε}^{i} \left(V\right)$ wherein the end-user metric *mᵢ* and the control-user metrics *vᵢ and v_{c}* are a revenue value and *T* is the total revenue over all end-users.

5. The method according to claim 4, wherein the end-user metric *mᵢ* and the control-user metrics *vᵢ and v_{c}* are one of data traffic, a total number of calls and length of calls consumed.

6. The method according to claims 4 or 5, wherein the end-user metric *mᵢ* and the control-user metrics *vᵢ and v_{c}* further comprise a network ID and MSISDN.

7. The method according to any of the preceding claims, wherein the homomorphic cryptosystem is a Benaloh cryptosystem where operation × is the multiplication mod n.

8. The method according to any of the preceding claims, wherein the homomorphic cryptosystem is a Paillier cryptosystem where operation × is the multiplication mod *n*².

9. The method according any of the preceding claims, wherein:
for each end-user *i* of the service provider, the service provider further:
- indexing the plurality of XDR's by generating an end-user identification *IDᵢ* in each XDR using a hash function of end-user *i's* MSISDN, *Cᵢ* and *Rᵢ*.

10. The method according to any of the preceding claims, wherein
for the network *j* of the *N* networks, the network owner of the network *j* limits the probability of accepting fake information as valid below a threshold t, for a given proportion of fake information published by the service provider *f*, by selecting a number of control users equal or higher than the minimum value of control users, *K*, that makes said probability below the threshold:
- wherein the probability *P* of network owner accepting fake information as valid is computed as $\begin{matrix}P \left(I, K, f\right) = \frac{αI}{I} \times \frac{αI - 1}{I - 1} \times … \times \frac{αI - K + 1}{I - K + 1} \\ = {\prod }_{i = 0}^{K - 1} \frac{αI - i}{I - i}\end{matrix}$ wherein *α* = 1 - *f*
wherein *I* is the total number of end-users in the network *j*, *f is* the proportion of fake information published by the service provider and *K* a number of control-users of the network *j*.

11. The method according to claim 10, wherein
for the network *j* of the *N* networks, the network owner of the network *j:*
- computing an overall fraud risk as: $R \left(I, K, f\right) = f \times P \left(I, K, f\right)$

12. A system adapted to perform a method for data validation in a mobile network infrastructure between a service provider associated with a first device as part of the system and *N* networks, each network having a network owner associated with a respective second device as part of the system, end-users and a set of *c* control users, being the control users those end-users for which the network owner knows at least a metric of their use of the services of the service provider, the method comprising the following steps for each network:
- given an end-user *i* in a network *j* of *the N* networks, the first device generating a random number *rᵢ* wherein *rᵢ* is computed based on data known to the end-user;
given a homomorphic cryptosystem wherein the result of applying a first operation, ×, to two encrypted data is the same as encrypting the result of a second operation, +, to the two unencrypted data as: $ε \left({m}_{1}\right) \times ε \left({m}_{2}\right) = ε \left({m}_{1}+{m}_{2}\right)$
wherein *ε* is the encryption function, and *m*1 and *m*2 are the unencrypted data; given a control-user *c* in the network, the second device validating a XDR of the control-user *c*, stored by the first device in an immutable ledger, the XDR comprising an encryption of a metric *v̅_{c}* of the control-user *c* by:
the second device extracting *E_{c} = ε*(*v̅_{c}*), from the XDR that was stored in the immutable ledger, being *v̅_{c}* the revenue of control user *c* that the first device has considered for the control user *c*;
the second device further computing: ${E}_{c} \times ε \left({r}_{c}\right) = E$
the second device requesting the first device to decrypt 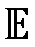 by applying the decryption function *εⁱ* of the homomorphic cryptosystem: ${ε}^{i} \left(E\right)$ and
wherein the second device validates the XDR of the control-user *c*, if ${r}_{c} + {v}_{c} = {ε}^{i} \left(E\right) .$

## Patentansprüche

1. Verfahren zur Datenvalidierung in einer Mobilnetzinfrastruktur zwischen einem Dienstanbieter und *N* Netzen, wobei jedes Netz einen Netzeigentümer, Endbenutzer und eine Menge von *c* Steuerbenutzern aufweist, wobei die Steuerbenutzer die Endbenutzer sind, für die der Netzeigentümer die Informationen des Verbrauchs von Diensten des Dienstanbieters, einschließlich der realen Einnahmen des Steuerbenutzers *v_{c},* kennt,
wobei das Verfahren die folgenden Schritte für jedes Netz aufweist:
- für jeden Endbenutzer *i* in einem Netz *j* der *N* Netze erzeugt der Dienstanbieter eine Zufallszahl *rᵢ*, wobei *rᵢ* basierend auf Daten berechnet wird, die dem Endbenutzer bekannt sind;
- unter der Annahme eines homomorphen Kryptosystems, wobei das Ergebnis des Anwendens einer ersten Operation, x, auf zwei verschlüsselte Daten das gleiche ist wie ein Verschlüsseln des Ergebnisses einer zweiten Operation, +, auf die zwei unverschlüsselten Daten als: $ε \left({m}_{1}\right) \times ε \left({m}_{2}\right) = ε \left({m}_{1}+{m}_{2}\right)$
wobei *ε* die Verschlüsselungsfunktion ist und *m*1 und *m*2 die unverschlüsselten Daten sind;
- unter der Annahme eines Steuerbenutzers *c* in dem Netz validiert ein Netzeigentümer des Netzes *j* eine externe Datendarstellung "XDR" des Steuerbenutzers *c*, die durch den Dienstanbieter in einem unveränderlichen Buch gespeichert ist, wobei die XDR eine Verschlüsselung einer Metrik *v̅_{c}* des Steuerbenutzers c aufweist durch:
der Netzeigentümer extrahiert *E_{c}* = *ε*( *v̅_{c}*) aus der XDR, die in dem unveränderlichen Buch gespeichert wurde, wobei *v_{c}* die Einnahmen des Steuerbenutzers *c* ist, die der Dienstanbieter für den Steuerbenutzer c in Betracht gezogen hat:
- der Netzeigentümer berechnet ferner: ${E}_{c} \times ε \left({r}_{c}\right) = E$
- der Netzeigentümer fordert den Dienstanbieter auf, IE zu entschlüsseln durch Anwenden der Entschlüsselungsfunktion *εⁱ* des homomorphen Kryptosystems: ${ε}^{i} \left(E\right)$ und
wobei der Netzeigentümer die XDR des Steuerbenutzers c validiert, wenn ${r}_{c} + {v}_{c} = {ε}^{i} \left(E\right) .$

2. Verfahren zur Datenvalidierung gemäß Anspruch 1, wobei der Dienstanbieter *rᵢ* basierend auf den Informationen der Verwendung der Dienste des Dienstanbieters durch den Endbenutzer *i* berechnet.

3. Verfahren zur Datenvalidierung gemäß Anspruch 2, wobei der Dienstanbieter *rᵢ* berechnet als: ${r}_{i} = Hash \left({C}_{i}∩{R}_{i}\right) mod n$ *wobei* ∩:*Zeichenfolgenverkettung*
wobei *Cᵢ* eine Liste aller Telefonnummern ist, zu denen der Endbenutzer *i* angerufen hat,
wobei *Ri* eine Liste aller Nummern ist, von denen der Endbenutzer *i* einen Anruf empfangen hat,
wobei *n* in dem öffentlichen Schlüssel des homomorphen Kryptosystems enthalten ist.

4. Verfahren zur Datenvalidierung gemäß Anspruch 1, das ferner aufweist:
für jeden Endbenutzer des Dienstanbieters, stellt der Dienstanbieter ferner Folgendes bereit:
- Analysieren einer Verkehrslast des Endbenutzers *i* in den *N* Netzen, um eine Mehrzahl von XDRs zu erzeugen, die den *N* Netzen zugeordnet sind, wobei jede XDR eine Metrik *mᵢ* des Endbenutzers *i* aufweist;
- Anonymisieren der XDRs durch:
Berechnen verschlüsselter Werte *ε(mᵢ)* der Metriken *mᵢ* des Endbenutzers mit einem öffentlichen Schlüssel,
- Umschreiben der XDRs mit den verschlüsselten Werten *ε*(*mᵢ*); und
- Hochladen der anonymisierten XDRs in ein Netz mit unveränderlichem Buch, das von dem Dienstanbieter und den *N* Netzen gemeinschaftlich verwendet wird,
für das Netz *j* der *N* Netze, stellt der Dienstanbieter Folgendes bereit:
- - Berechnen des Gesamtwerts der Metriken des Endbenutzers in dem Netz j als T *=* Σ*_{i∈alle Benutzer} mᵢ*;
- - Bereitstellen des Gesamtwerts T und des öffentlichen Schlüssels für den Netzeigentümer;
für das Netz *j* der *N* Netze, durch den Netzeigentümer des Netzes *j:*
- Zugreifen mit dem öffentlichen Schlüssel auf die verschlüsselten Werte *ε*(*mᵢ*) der anonymisierten XDRs in dem unveränderlichen Buch;
- Berechnen eines Werts *V_{T}* = Π*i*_{∈}*_{alle Benutzer} ε(mᵢ)* mit den verschlüsselten Werten *ε(mᵢ),* auf die zugegriffen wird;
- Erzeugen einer Liste von zufälligen ganzen Zahlen R = [r₁, ... , r_{c}], die Steuerbenutzern des Netzeigentümers des Netzes j zugeordnet sind;
- Berechnen: ${\prod }_{c ∈ Steuerbenutzer} ∈ {\left({v}_{c}\right)}^{{r}_{c}} = {V}_{C}$
- ferner Berechnen: $V = {V}_{T} \times {V}_{c}$
- Auffordern des Dienstanbieters, *V* zu entschlüsseln, durch: ${ε}^{i} \left(V\right)$
und; der Netzeigentümer validiert den Gesamtwert der Metriken *T* des Endbenutzers, wenn $T + {\sum }_{c ∈ Steuerbenutzer} {r}_{c} x {v}_{c} = {ε}^{i} \left(V\right)$ wobei die Metrik des Endbenutzers *mᵢ* und die Metriken des Steuerbenutzers *vᵢ und v_{c}* ein Einnahmenwert sind und *T* die Gesamteinnahmen über alle Endbenutzer ist.

5. Verfahren gemäß Anspruch 4, wobei die Metrik des Endbenutzers *mᵢ* und die Metriken des Steuerbenutzers *vᵢ* und *v_{c}* eines von Datenverkehr, einer Gesamtanzahl von Anrufen und einer Länge von konsumierten Anrufen sind.

6. Verfahren gemäß Anspruch 4 oder 5, wobei die Metrik des Endbenutzers *mᵢ* und die Metriken des Steuerbenutzers *vᵢ* und *v_{c}* ferner eine Netz-ID und MSISDIN aufweisen.

7. Verfahren gemäß einem der vorhergehenden Ansprüche, wobei das homomorphe Kryptosystem ein Benaloh-Kryptosystem ist, wobei die Operation x die Multiplikation mod n ist.

8. Verfahren gemäß einem der vorhergehenden Ansprüche, wobei das homomorphe Kryptosystem ein Paillier-Kryptosystem ist, wobei die Operation x die Multiplikation mod *n*² ist.

9. Verfahren gemäß einem der vorhergehenden Ansprüche, wobei:
für jeden Endbenutzer *i* des Dienstanbieters, der Dienstanbieter ferner Folgendes bereitstellt:
- Indizieren der Mehrzahl von XDRs durch Erzeugen einer Endbenutzer-Identifikation *IDᵢ* in jeder XDR unter Verwendung einer Hash-Funktion von MSISDIN, *Cᵢ* und *Rᵢ* des Endbenutzers i.

10. Verfahren gemäß einem der vorhergehenden Ansprüche, wobei für das *Netz j* der N Netze begrenzt der Netzeigentümer des Netzes *j* die Wahrscheinlichkeit, gefälschte Informationen als gültig zu akzeptieren, für einen gegebenen Anteil von gefälschten Informationen, die von dem Dienstanbieter *f* veröffentlicht werden, unter eine Schwelle *t*, indem eine Anzahl von Steuerbenutzern ausgewählt wird, die gleich dem oder höher als der Mindestwert von Steuerbenutzern *K* ist, der die Wahrscheinlichkeit unter der Schwelle bringt:
- wobei die Wahrscheinlichkeit *P*, dass der Netzeigentümer gefälschte Informationen als gültig akzeptiert, berechnet wird als $\begin{matrix}P \left(I, K, f\right) = \frac{αI}{I} \times \frac{αI - 1}{I - 1} \times … \times \frac{αI - K + 1}{I - K + 1} \\ = {\prod }_{i = 0}^{K - 1} \frac{αI - i}{I - i}\end{matrix}$ wobei α =1 - f wobei / die Gesamtanzahl von Endbenutzern in dem Netz *j* ist, *f* der Anteil von gefälschten Informationen ist, die von dem Dienstanbieter veröffentlicht werden, und *K* eine Anzahl von Steuerbenutzern des Netzes *j* ist.

11. Verfahren gemäß Anspruch 10, wobei
für das Netz *j* der *N* Netze, durch den Netzeigentümer des Netzes *j*:
- Berechnen eines Gesamtbetrugsrisikos als: $R \left(I, K, f\right) = f x P \left(I, K, f\right)$

12. System, das zum Durchführen eines Verfahrens zur Datenvalidierung in einer Mobilnetzinfrastruktur zwischen einem Dienstanbieter, der einer ersten Vorrichtung als Teil des Systems zugeordnet ist, und N Netzen angepasst ist, wobei jedes Netz einen Netzeigentümer, der einer jeweiligen zweiten Vorrichtung als Teil des Systems zugeordnet ist, Endbenutzer und eine Menge von c Steuerbenutzern aufweist, wobei die Steuerbenutzer diejenigen Endbenutzer sind, für die der Netzeigentümer zumindest eine Metrik ihrer Nutzung der Dienste des Dienstanbieters kennt, wobei das Verfahren die folgenden Schritte für jedes Netz aufweist:
- unter der Annahme eines Endbenutzers *i* in einem Netz *j* der *N* Netze erzeugt die erste Vorrichtung eine Zufallszahl *rᵢ*, wobei *rᵢ* basierend auf Daten berechnet wird, die dem Endbenutzer bekannt sind;
unter der Annahme eines homomorphen Kryptosystems, wobei das Ergebnis des Anwendens einer ersten Operation, x, auf zwei verschlüsselte Daten das gleiche ist wie ein Verschlüsseln des Ergebnisses einer zweiten Operation, +, auf die zwei unverschlüsselten Daten als: $ε \left({m}_{1}\right) \times ε \left({m}_{2}\right) = ε \left({m}_{1}+{m}_{2}\right)$
wobei *ε* die Verschlüsselungsfunktion ist und *m*1 und *m*2 die unverschlüsselten Daten sind;
unter der Annahme eines Steuerbenutzers *c* in dem Netz validiert die zweite Vorrichtung eine XDR des Steuerbenutzers *c*, die durch die erste Vorrichtung in einem unveränderlichen Buch gespeichert ist, wobei die XDR eine Verschlüsselung einer Metrik *v̅_{c}* des Steuerbenutzers c aufweist durch:
die zweite Vorrichtung extrahiert *E_{c} = ε( v̅_{c})* aus der XDR, die in dem unveränderlichen Buch gespeichert wurde, wobei *v̅_{c}* die Einnahmen des Steuerbenutzers c ist, die die erste Vorrichtung für den Steuerbenutzer c in Betracht gezogen hat:
die zweite Vorrichtung berechnet ferner: ${E}_{c} \times ε \left({r}_{c}\right) = E$
die zweite Vorrichtung fordert die erste Vorrichtung auf, IE zu entschlüsseln durch Anwenden der Entschlüsselungsfunktion *εⁱ* des homomorphen Kryptosystems: ${ε}^{i} \left(E\right)$ und
wobei die zweite Vorrichtung die XDR des Steuerbenutzers c validiert, wenn ${r}_{c} + {v}_{c} = {ε}^{i} \left(E\right) .$

## Revendications

1. Procédé de validation de données dans une infrastructure de réseau mobile entre un fournisseur de services et N réseaux, chaque réseau ayant un propriétaire de réseau, des utilisateurs finaux et un ensemble de utilisateurs de contrôle *c,* les utilisateurs de contrôle étant les utilisateurs finaux pour lesquels le propriétaire de réseau connaît les informations de la consommation de services du fournisseur de services, y compris le revenu réel d'utilisateur de contrôle *v_{c}*,
le procédé comprenant les étapes suivantes pour chaque réseau :
- pour chaque utilisateur final *i* dans un réseau *j* des *N* réseaux, le fournisseur de services générant un nombre aléatoire *rᵢ*, dans lequel *rᵢ* est calculé sur la base de données connues de l'utilisateur final ;
- étant donnée un cryptosystème homomorphe dans lequel le résultat de l'application d'une première opération, ×, à deux données chiffrées est le même que le chiffrement du résultat d'une deuxième opération, +, sur les deux données non chiffrées comme : $ε \left({m}_{1}\right) \times ε \left({m}_{2}\right) = ε \left({m}_{1}+{m}_{2}\right)$
dans lequel *ε* est la fonction de chiffrement, et *m*1 et *m*2 sont les données non chiffrées ;
- étant donnée un utilisateur de contrôle *c* dans le réseau, un propriétaire de réseau du réseau *j* validant une représentation de données externes « XDR » de l'utilisateur de contrôle *c*, stockée par le fournisseur de services dans un registre immuable, l'XDR comprenant un chiffrement d'une métrique *v̅_{c}* de l'utilisateur de contrôle c par :
le propriétaire du réseau extrayant *E_{c}* = *ε*(*v̅_{c}*),de l'XDR qui a été stockée dans le registre immuable, *v̅_{c}* étant le revenu de l'utilisateur de contrôle *c* que le fournisseur de services a pris en compte pour l'utilisateur de contrôle *c* ;
- le propriétaire de réseau calculant en outre : ${E}_{c} \times ε \left({r}_{c}\right) = E$
- le propriétaire de réseau demandant au fournisseur de services de déchiffrer IE en appliquant la fonction de déchiffrement *εⁱ* du cryptosystème homomorphe : ${ε}^{i} \left(E\right)$
et
dans lequel le propriétaire de réseau valide l'XDR de l'utilisateur de contrôle c, si ${r}_{c} + {ν}_{c} = {ε}^{i} \left(E\right) .$

2. Procédé de validation de données selon la revendication 1, le fournisseur de services calculant *rᵢ* sur la base des informations de l'utilisation des services du fournisseur de services par l'utilisateur final i.

3. Procédé de validation de données selon la revendication 2, le fournisseur de services calculant *rᵢ* comme : ${r}_{i} = hash \left({C}_{i}∩{R}_{i}\right) mod n$
dans lequel ∩ *: Concaténation de chaînes*
dans lequel *Ci* est une liste de tous les numéros de téléphone que l'utilisateur final *i* a appelés,
dans lequel *Ri* est une liste de tous les numéros à partir desquels l'utilisateur final *i* a reçu un appel, dans lequel *n* est compris dans la clé publique du cryptosystème homomorphe.

4. Procédé de validation de données selon la revendication 1, comprenant en outre pour chaque utilisateur final du fournisseur de services, le fournisseur de services, en outre :
- analysant la charge de trafic de l'utilisateur final *i* dans les *N* réseaux pour générer une pluralité de XDR associées aux *N* réseaux, chaque XDR comprenant une métrique *mᵢ* de l'utilisateur final *i ;*
- anonymisant les XDR par :
le calcul de valeurs chiffrées *ε* ( *mᵢ* ) des métriques de l'utilisateur final m *ᵢ* avec une clé publique,
- réécrivant les XDR avec les valeurs chiffrées *ε* (*mᵢ* ) ; et
- téléversant les XDR anonymisées dans un réseau de registre immuable partagé par le fournisseur de services et les N réseaux,
pour le réseau *j* des *N* réseaux, le fournisseur de services :
- calculant la valeur totale des métriques de l'utilisateur final dans ledit réseau *j* comme *T* = Σ_{i ∈} *ₜₒᵤₛ utilisateurs mᵢ* ;
- fournissant au propriétaire de réseau la valeur totale *T* et la clé publique ;
pour le réseau *j* des *N* réseaux, le propriétaire de réseau du réseau *j* :
- accédant avec la clé publique aux valeurs chiffrées *ε*(*mᵢ* ) des XDR anonymisées dans le registre immuable ;
- calculant une valeur *V_{T} =* 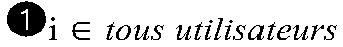 *ε*( *mᵢ* ) avec les valeurs chiffrées *ε*( *mᵢ* ) consultées ;
- générant une liste de nombres entiers aléatoires R = [r₁, ..., r_{c} ], associés à des utilisateurs de contrôle du propriétaire de réseau du réseau j
- calculant : ${\prod }_{c ∈ utilisateurs de contrôle} ε {\left({v}_{c}\right)}^{{r}_{c}} = {V}_{c}$
- calculant en outre : $V = {V}_{T} \times {V}_{c}$
- demandant au fournisseur de services de déchiffrer *V* par : ${ε}^{i} \left(V\right)$ et
le propriétaire du réseau validant la valeur totale des métriques T de l'utilisateur final si 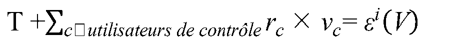
dans lequel la métrique d'utilisateur final *mᵢ* et les métriques d'utilisateur de contrôle *vᵢ et v_{c}* sont une valeur de revenu et *T* est le revenu total sur tous les utilisateurs finaux.

5. Procédé selon la revendication 4, dans lequel la métrique d'utilisateur final *mᵢ* et les métriques d'utilisateur de contrôle *vᵢ et v_{c}* sont l'un parmi le trafic de données, un nombre total d'appels et une durée d'appels consommés.

6. Procédé selon les revendications 4 ou 5, dans lequel la métrique d'utilisateur final *mᵢ* et les métriques d'utilisateur de contrôle *vᵢ et v_{c}* comprennent en outre un ID de réseau et un MSISDN.

7. Procédé selon l'une quelconque des revendications précédentes, dans lequel le cryptosystème homomorphe est un cryptosystème de Benaloh où l'opération × est la multiplication mod n.

8. Procédé selon l'une quelconque des revendications précédentes, dans lequel le cryptosystème homomorphe est un cryptosystème de Paillier où l'opération × est la multiplication mod *n*².

9. Procédé selon l'une quelconque des revendications précédentes, dans lequel :
pour chaque utilisateur final i du fournisseur de services, le fournisseur de services, en outre :
- indexant la pluralité de XDR en générant un identifiant d'utilisateur final *IDᵢ* dans chaque XDR en utilisant une fonction de hachage de MSISDN, *Cᵢ* et Rᵢ de l'utilisateur final *i.*

10. Procédé selon l'une quelconque des revendications précédentes, dans lequel pour le réseau j des N réseaux, le propriétaire de réseau du réseau j limite la probabilité d'accepter de fausses informations comme valides en dessous d'un seuil t, pour une proportion donnée de fausses informations publiées par le fournisseur de services f, en sélectionnant un nombre d'utilisateurs de contrôle égal ou supérieur à la valeur minimale d'utilisateurs de contrôle, K, qui rend ladite probabilité inférieure au seuil :
- dans lequel la probabilité P du propriétaire de réseau acceptant de fausses informations comme valides est calculée comme $\begin{matrix}P \left(I, k, f\right) = \frac{αI}{I} \times \frac{αI - 1}{I - 1} \times … \times \frac{αI - K + 1}{I - K + 1} \\ = {\prod }_{i = 0}^{K - 1} \frac{αI - i}{I - i}\end{matrix}$ dans lequel *α*= 1-*f* dans lequel *I* est le nombre total d'utilisateurs finaux dans le réseau *j, f* est la proportion de fausses informations publiées par le fournisseur de services et *K* est un nombre d'utilisateurs de contrôle du réseau*j*.

11. Procédé selon la revendication 10, dans lequel pour le réseau *j* des *N* réseaux, le propriétaire de réseau du *réseau j* :
- calculant un risque global de fraude comme : $R \left(I, K, f\right) = f \times P \left(I, K, f\right)$

12. Système adapté pour réaliser un procédé de validation de données dans une infrastructure de réseau mobile entre un fournisseur de services associé à un premier dispositif faisant partie du système et Nréseaux, chaque réseau ayant un propriétaire de réseau associé à un deuxième dispositif respectif faisant partie du système, des utilisateurs finaux et un ensemble d'utilisateurs de contrôle c, les utilisateurs de contrôle étant les utilisateurs finaux pour lesquels le propriétaire de réseau connaît au moins une métrique de leur utilisation des services du fournisseur de services, le procédé comprenant les étapes suivantes pour chaque réseau :
- étant donnée un utilisateur final *i* dans un réseau *j* des *N* réseaux, le premier dispositif générant un nombre aléatoire *rᵢ*, dans lequel *rᵢ* est calculé sur la base de données connues de l'utilisateur final ;
étant donnée un cryptosystème homomorphe dans lequel le résultat de l'application d'une première opération, ×, à deux données chiffrées est le même que le chiffrement du résultat d'une deuxième opération, +, sur les deux données non chiffrées comme : $ε \left({m}_{1}\right) \times ε \left({m}_{2}\right) = ε \left({m}_{1}+{m}_{2}\right)$
dans lequel *ε* est la fonction de chiffrement, et *m*1 et *m*2 sont les données non chiffrées ; étant donnée un utilisateur de contrôle c dans le réseau, le deuxième dispositif validant une XDR de l'utilisateur de contrôle c, stockée par le premier dispositif dans un registre immuable, l'XDR comprenant un chiffrement d'une métrique *v̅_{c}* de l'utilisateur de contrôle c par :
le deuxième dispositif extrayant *E_{c}* = *ε*(*v̅_{c}*), de l'XDR qui a été stocké dans le registre immuable, étant *v̅_{c}* le revenu de l'utilisateur de contrôle c que le premier dispositif a pris en compte pour l'utilisateur de contrôle c ;
le deuxième dispositif calculant en outre : ${E}_{c} \times ε \left({r}_{c}\right) = E$
le deuxième dispositif demandant au premier dispositif de déchiffrer 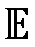 en appliquant la fonction de déchiffrement *εⁱ* du cryptosystème homomorphe : ${ε}^{i} \left(E\right)$ et
dans lequel le deuxième dispositif valide l'XDR de l'utilisateur de contrôle c, si ${r}_{c} + {ν}_{c} = {ε}^{i} \left(E\right) .$
